# EUROPÄISCHE PATENTSCHRIFT

(11) **EP 4 099 427 B1**
(45) Veröffentlichungstag und Bekanntmachung des Hinweises auf die Patenterteilung: **11.06.2025**
(21) Anmeldenummer: 22175722.2
(22) Anmeldetag: 27.05.2022
(51) Int. Cl.: H01M 4/04

(54) **VERFAHREN ZUR HERSTELLUNG EINER BATTERIEELEKTRODE**
METHOD FOR PRODUCING A BATTERY ELECTRODE
PROCÉDÉ DE FABRICATION D'UNE ÉLECTRODE DE BATTERIE

(30) Priorität: 31.05.2021 DE 102021205500
(43) Veröffentlichungstag der Anmeldung: 07.12.2022
(73) Patentinhaber: PowerCo SE, 38239 Salzgitter (DE)
(72) Erfinder: BREUER, Alexander, 29227 Celle (DE); JORDAN, Marco, 38229 Salzgitter (DE); WESTPHAL, Bastian, 38173 Sickte (DE)
(74) Vertreter: FDST Patentanwälte

(56) Entgegenhaltungen:
- WO-A1-2018/134485
- US-A1- 2015 325 877
- US-A1- 2017 040 605
- US-A1- 2017 306 474
- GILLNER ARNOLD ET AL: "High power parallel ultrashort pulse laser processing", PROCEEDINGS OF SPIE; [PROCEEDINGS OF SPIE ISSN 0277-786X VOLUME 10524], SPIE, US, vol. 9740, 9 March 2016 (2016-03-09), pages 974010 - 974010, XP060066015, ISBN: 978-1-5106-1533-5, DOI: 10.1117/12.2222845

## Beschreibung

Die Erfindung betrifft ein Verfahren zur Herstellung einer Batterieelektrode, bei welchem eine Turtosität eines Elektrodenmaterials reduziert wird. Die Erfindung betrifft weiterhin eine Vorrichtung zur Durchführung des Verfahrens und eine Batterieelektrode sowie eine Batteriezelle mit einer solchen Batterieelektrode.

Elektrisch antreibbare oder angetriebene Kraftfahrzeuge, wie beispielsweise Elektro- oder Hybridfahrzeuge, weisen typischerweise einen Elektromotor als Antriebsmaschine auf, welcher zur Versorgung mit elektrischer Energie an einen fahrzeuginternen elektrischen (Hochvolt-)Energiespeicher gekoppelt ist. Derartige Energiespeicher sind beispielsweise in Form von (Fahrzeug-)Batterien ausgeführt.

Unter einer elektrochemischen Batterie ist hierbei insbesondere eine sogenannte sekundäre Batterie (Sekundärbatterie) des Kraftfahrzeugs zu verstehen, bei welcher eine verbrauchte chemische Energie mittels eines elektrischen (Auf-)Ladevorgangs wiederherstellbar ist. Derartige Batterien sind insbesondere als elektro-chemische Akkumulatoren, beispielsweise als Lithium-lonen-Akkumulatoren, ausgeführt. Zur Erzeugung oder Bereitstellung einer ausreichend hohen Betriebsspannung weisen solche Batterien typischerweise mehrere einzelne Batteriezellen auf, welche modular verschaltet sind.

Batterien der genannten Art weisen auf einer Batteriezellebene eine Kathode und eine Anode sowie einen Separator und einen Elektrolyten auf. Die Elektroden, also die Anode sowie die Kathode, sind aus einem jeweiligen (Elektroden-)Aktivmaterial hergestellt.

Zur Herstellung von Batterien sind beispielsweise Extrusionsverfahren möglich, bei welchen die Batterieelektroden der Batteriezellen aus einer plastischen Masse hergestellt werden. Die Elektrodenpasten werden hierbei als Aktivmaterialbeschichtung auf einen jeweiligen Stromableiter, insbesondere auf eine Kupfer- oder Aluminiumfolie, aufgetragen. Dadurch wird ein streifenoder bandförmiges Elektrodenbandmaterial oder Elektrodensubstrat hergestellt, welches insbesondere als Endlosmaterial oder Rollenmaterial, als sogenannter Elektrodenwickel (Elektrodencoil), konfektioniert und weiterverarbeitet wird. Das quasi endlose Elektrodenbandmaterial weist hierbei eine Länge auf, welche wesentlich größer dimensioniert ist, als dessen Breite oder Dicke beziehungsweise Höhe.

Aus dem Elektrodenbandmaterial wird anschließend eine Anzahl von Batterieelektroden hergestellt. Hierzu wird das Elektrodenbandmaterial an vorgegebenen Schnittstellen zu Elektrodenblättern vereinzelt, also abgetrennt oder abgelängt.

Die Laserstrukturierung von (Batterie-)Elektroden ist ein vielversprechender Ansatz um die Eigenschaften von Lithium-Ionen-Batterien (LIB) zu verbessern. Die Transportkinetik in LIB wird signifikant von der Porenstruktur der Elektroden beeinflusst. Die Turtosität der Elektroden- oder Aktivmaterialbeschichtung spielt dabei eine wesentliche Rolle. Unter "Turtosität" wird hierbei insbesondere der Grad der Gewundenheit der Transportwege, insbesondere der elektrischen Transportwege, in porösen Materialien verstanden.

Die Turtosität der Aktivmaterialbeschichtung stellt eine Transportlimitierung insbesondere für den Ionentransport da. Um diese Transportlimitierung zu senken können zusätzliche, künstliche Poren (Kavitäten) und Strukturen in die Aktivmaterialbeschichtung eingebracht werden. Durch eine Reduzierung der Turtosität der Aktivmaterialbeschichtung wird in der Folge ein interner Zellwiderstand der Batteriezelle reduziert. Somit wird die Zellleistung oder Zellperformance der Batteriezelle verbessert. Insbesondere wird durch eine Reduzierung der Turtosität eine höhere Zyklenstabilität und höhere Lade- und Entladekapazitäten, insbesondere bei hohen Stromraten aufgrund von reduzierten Zellinnnenwiderständen, realisiert. Des Weiteren stellt sich eine verkürzte Benetzungszeit bei der Elektrolytbefüllung (Wetting) ein, da durch die erzeugten Mikrokapillaren eine schnellere Imprägnierung der Elektroden mit dem Elektrolyten ermöglicht wird.

Ein gängiges Verfahren zur Reduzierung der Turtosität bei Batterieelektroden sind hierbei Laserapplikationen in kurzem- oder ultrakurzem Pulsbereich zur lokalen Ablation der Aktivmaterialbeschichtung. Unter "ablatieren" oder "Ablation" ist hierbei insbesondere eine oberflächennahe Laser-Ablation zu verstehen, bei welcher ein Laserstrahl ein Material lokal derart erwärmt, dass ein Plasma entsteht, und das Material durch die Aufheizung abgetragen oder verdampft wird. Der Laserstrahl wird hierbei auf das Elektrodenbandmaterial fokussiert, wobei in einer Wärmeeintragszone oder einer Wärmeeinflusszone das Material abgetragen, und somit eine künstliche Pore, Kavität oder Struktur erzeugt wird.

Zur Realisierung leistungsstärkerer Batterien oder Batteriezellen sind insbesondere Batterieelektroden mit vergleichsweise großen Abmessungen gewünscht. Daher ist eine Laserbearbeitung von Elektrodenmaterialen mit einer zunehmend größeren Breite, und somit längeren Bearbeitungswegen, notwendig. Nachteiligerweise ist die Bearbeitung mit konventionellen Laserapplikationen in der Regel sehr zeitaufwendig und daher unwirtschaftlich. Es fehlen Prozesse die eine Hochgeschwindigkeitsbearbeitung mit einer kurzen Prozesszeit ermöglichen. Trotz einer ständigen Erhöhung der Leistung der industriell verfügbaren gepulsten Laserstrahl-Quellen, bleiben große Herausforderungen bei der Strahlablenkung und Positionierung, die sich aus den Struktur- oder Porositätsanforderungen ergeben.

Aus der DE 10 2017 218 130 A1 ist ein Verfahren zur Herstellung eines Stromableiters bekannt. Hierbei wird ein Stromableiter, also die Anoden- oder Kathodenfolie, vor der Auftragung einer Aktivmaterialbeschichtung mit einem Laserstrahl bearbeitet. Der Laserstrahl wird hierbei mittels eines drehenden Polygonscanners und eines Galvanometerscanners über einen sich bewegenden Stromableiter geführt. Das Material des Stromableiters wird hierbei an mehreren Stellen lokal aufgeschmolzen, so dass sich aufgrund des Marangoni-Konvektion-Effekts emporstehende Tröpfchenstrukturen auf der Oberfläche des Stromableiters ausbilden, welche anschließend erstarren. Die erstarrten Tröpfchenstrukturen bilden hierbei Verankerungsmöglichkeiten für die nachfolgend aufgetragene Aktivmaterialbeschichtung, wodurch die Haftung des Aktivmaterials auf dem Stromableiter verbessert wird.

In der US 2017/040605 A1 ist ein Herstellungsverfahren für eine Batterie beschrieben, bei welchem ein Substrat mit einer ersten Oberfläche gebildet wird, wobei die erste Oberfläche eine Vielzahl von Poren aufweist. Die Poren können so konfiguriert sein, dass sie Lithiummetall aufnehmen. Verfahrensgemäß wird Lithiummetall in mindestens einen Teil der Vielzahl von Poren eingebracht.

Der Erfindung liegt die Aufgabe zugrunde, ein besonders geeignetes Verfahren zur Herstellung einer Batterieelektrode anzugeben. Insbesondere soll eine Oberflächenstrukturierung mit einer möglichst kurzen und wirtschaftlichen Prozesszeit realisiert werden. Der Erfindung liegt weiterhin die Aufgabe zugrunde, eine besonders geeignete Vorrichtung zur Durchführung des Verfahrens anzugeben.

Hinsichtlich des Verfahrens wird die Aufgabe mit den Merkmalen des Anspruchs 1 und hinsichtlich der Vorrichtung mit den Merkmalen des Anspruchs 7 erfindungsgemäß gelöst. Vorteilhafte Ausgestaltungen und Weiterbildungen sind Gegenstand der Unteransprüche. Die im Hinblick auf das Verfahren angeführten Vorteile und Ausgestaltungen sind sinngemäß auch auf die Vorrichtung übertragbar und umgekehrt.

Sofern nachfolgend Verfahrensschritte beschrieben werden, ergeben sich vorteilhafte Ausgestaltungen für die Vorrichtung insbesondere dadurch, dass diese ausgebildet ist, einen oder mehrere dieser Verfahrensschritte auszuführen.

Das erfindungsgemäße Verfahren ist zur Herstellung einer Batterieelektrode, insbesondere für eine Lithium-Ionen-Batterie (LIB), vorgesehen sowie dafür geeignet und ausgestaltet. Hierbei wird ein band- oder streifenförmiges Elektrodenmaterial bereitgestellt, und beispielsweise mittels eines Förderbandes entlang einer Förderrichtung zu einem Bearbeitungsort gefördert. Unter dem Bearbeitungsort ist hierbei insbesondere ein ortsfester oder stationärer Abschnitt entlang der Förderrichtung zu verstehen, in welchem das Elektrodenmaterial, insbesondere dessen Oberfläche, - wie nachfolgend erläutert - bearbeitet wird.

Das Elektrodenmaterial weist hierbei eine elektrisch leitfähige (Metall-)Folie als Stromableiter und eine darauf aufgebrachte Aktivmaterialbeschichtung auf. Die Folie kann als Substrat hierbei beispielsweise einseitig oder beidseitig mit dem Aktivmaterial beschichtet sein. Das Elektrodenmaterial kann hierbei als ein Anodenmaterial oder Kathodenmaterial ausgebildet sein, wobei bei einem Anodenmaterial eine Kupferfolie mit einem darauf aufgebrachten Anodenaktivmaterial, und bei einem Kathodenmaterial eine Aluminiumfolie mit einem Kathodenaktivmaterial verwendet werden. Das Elektrodenmaterial weist beispielsweise entlang seiner Längsrichtung einen nicht beschichteten oder unbeschichteten Randbereich der Folie auf, also einen randseitigen Folienbereich, welcher nicht mit der Aktivmaterialbeschichtung versehen ist, aus welchen im Zuge der Herstellung der Batterieelektroden jeweils ein zugeordnetes Ableiterfähnchen (Stromkollektor) zur Kontaktierung der Batterieelektrode hergestellt wird.

Verfahrensgemäß wird an dem Bearbeitungsort ein Laserstrahl mittels eines sich drehenden oder drehbaren Polygonscanners bewegt, und durch eine F-Theta-Linse beziehungsweise durch ein F-Theta-Objektiv auf das Elektrodenmaterial fokussiert. Zur Bewegung oder Ablenkung des Laserstrahls ist beispielsweise zusätzlich zu dem Polygonscanner auch ein Galvanometerscanner (Galvoscanner) vorgesehen. Unter einer F-Theta-Linse oder einem F-Theta-Objektiv wird hierbei insbesondere ein Flachfeld-Scanning-Objektiv (Flat-Field-Scanning-Objektiv) verstanden, bei welchem eine Verschiebung oder Ablenkung des Laserstrahls im Zuge der Fokussierung vom Produkt aus der effektiven Brennweite (F) und dem Tangens des Ablenkwinkels (Theta) abhängt.

Verfahrensgemäß wird die Aktivmaterialbeschichtung mittels des fokussierten Laserstrahls an einer Vielzahl von Ablationsstellen lokal entfernt, insbesondere ablatiert. Mit anderen Worten wird die Oberfläche des Elektrodenmaterials mittels des Laserstrahls strukturiert. Durch die Ablation wird an den Ablationsstellen eine künstliche Pore, Kavität oder Struktur als lokale Vertiefung in die Aktivmaterialbeschichtung eingebracht, und somit die Turtosität des Elektrodenmaterials reduziert oder verringert. Dadurch wird die Zellleistung oder Zellperformance einer mit einer solchen Batterieelektrode ausgestatteten Batteriezelle verbessert. Somit ist ein besonders geeignetes Verfahren zur Herstellung der Batterieelektrode realisiert.

Im Zuge der erfindungsgemäßen Oberflächenstrukturierung werden als Strukturen beispielsweise punkt-, sicken- oder lochförmige Vertiefungen in die Aktivmaterialbeschichtung eingebracht
Das erfindungsgemäße Verfahren ermöglicht einen Hochgeschwindigkeitsprozess zur Strukturierung der Batterieelektrode. Dadurch wird die Prozesszeit für die turtositätsreduzierende Oberflächenstrukturierung des Elektrodenmaterials wesentlich reduziert, so dass eine wirtschaftliche Prozessführung im Rahmen der Batterieelektrodenherstellung für Fahrzeugbatterien ermöglicht wird.

Die hochdynamische Strahlablenkung erfolgt hierbei mittels eines drehenden oder drehbaren Polygonscanners, insbesondere eines Polygonspiegelscanners. Der Einsatz eines Polygonscanners für das Verfahren erlaubt gegenüber einer Methode mit herkömmlichen Scansystemen (Galvanometerscanner) wesentlich höhere Strahlablenkgeschwindigkeiten, womit die lokale Einwirkzeit der Laserstrahlung verringert wird. In der Regel kann durch die höhere Scangeschwindigkeit eine größere Laserleistung im Prozess umgesetzt werden, so dass die Prozessrate (hier die effektive Strukturgeschwindigkeit) erhöht wird. Das Scanregime bei einem Polygonscanner ist systembedingt stets rasternd.

Durch die Drehbewegung des Polygonrades des Polygonscanners wird der Laserstrahl entlang einer als schnellen Achse (fast axis) bezeichneten Richtung abgelenkt. Die schnelle Achse ist hierbei insbesondere senkrecht zur Förderrichtung, also entlang einer Querrichtung des Elektrodenmaterials orientiert.

Vorzugsweise wird die Laserstrahlung mit der Bewegung des Polygonrades getaktet, beispielsweise durch einen betätigbaren Shutter oder einen akusto-optischen Wandler (acousto-optical modulator, AOM) oder vorzugsweise durch eine gepulste Laserquelle. Durch das gezielte, zur Bewegung synchronisierte Zu- beziehungsweise Abschalten der Laserstrahlung können innerhalb des Scanfeldes der Optik nahezu beliebige "geradlinige" Vektoren mit definierter Länge laserbearbeitet werden. Durch eine zusätzliche Bewegung des Galvanometerscanners im System können die Bearbeitungslinien bei Bedarf innerhalb des Scanfeldes senkrecht verschoben werden. Der Galvanometerscanner weist hierbei einen Spiegel auf, mit welchem der Laserstrahl entlang einer als langsamen Achse (slow axis) bezeichneten Richtung abgelenkt wird. Die langsame Achse ist hierbei im Wesentlichen senkrecht zur schnellen Achse, beispielsweise entlang einer Längsrichtung des Elektrodenmaterials orientiert.

Die von der Laserquelle emittierte Strahlung wird durch Reflexion an einem rotierenden Polygonspiegel und an einem verkippbaren oder verschwenkbaren Galvanospiegel bewegt und mittels eines F-Theta-Objektivs auf das Elektrodenmaterial beziehungsweise die Aktivmaterialbeschichtung fokussiert. Im Fokusbereich der Laserstrahlung befindet sich das zu bearbeitende Werkstück, das Elektrodenmaterial (Anode oder Kathode). Durch die im Fokus auftretenden hohen Intensitäten wird das bestrahlte Material im Zuge der Ablation schlagartig aufgeschmolzen bzw. verdampft. Anders als bei klassischen Laserschneidprozessen, bewirkt bei dem verfahrensgemäßen Remotestrukturieren (Fernstrukturieren) lediglich der induzierte Dampfdruck den Materialaustrieb aus der Bearbeitungszone. Zusätzliche Prozessgase sind daher nicht zwingend notwendig.

In einer vorteilhaften Ausführung wird als Elektrodenmaterial eine quasi kontinuierliche Elektrodenbahn, insbesondere in Form eines Rollenmaterials (Elektrodencoil, Elektrodenwickel), oder ein einzelnes Elektrodenblatt verwendet. Mit anderen Worten kann die erfindungsgemäße Oberflächenstrukturierung des Elektrodenmaterials vor oder nach einer Vereinzelung der Elektrodenbahn in Elektrodenblätter erfolgen.

In einer denkbaren Ausgestaltung wird die Aktivmaterialbeschichtung an den Ablationsstellen zumindest zur Hälfte, insbesondere im Wesentlichen vollständig, ablatiert. Mit anderen Worten wird im Zuge der Ablation mindestens 50% bis zu beispielsweise 99% oder 100% der Aktivmaterialbeschichtung an der Ablationsstelle entfernt. Dies bedeutet, dass die mit der Laserstrahlung erzeugten (Oberflächen-)Strukturen eine Tiefe aufweisen, welche maximal der Schichtdicke und minimal die Hälfte der Schichtdicke beträgt. Die Schichtdicke ist hierbei die Materialdicke oder Höhe der auf die Folie aufgebrachten Aktivmaterialbeschichtung. Dadurch wird sichergestellt, dass die Ablationsstellen eine ausreichende Tiefe in der Aktivmaterialbeschichtung aufweisen, um den Zellwiderstand der Batteriezelle zu reduzieren.

In einer geeigneten Weiterbildung weisen die Tiefen der Strukturen beziehungsweise die Ablationsstellen hierbei einen Durchmesser von einigen wenigen Mikrometern auf. Insbesondere weisen die Ablationsstellen jeweils einen Durchmesser kleiner 20 µm (Mikrometer) auf.

In einer vorteilhaften Ausbildung entspricht der laterale Abstand zwischen je zwei Ablationsstellen je nach Tiefe der Ablationsstelle zwischen einer und zwei Schichtdicken der Aktivmaterialbeschichtung, um eine maximale Entfernung zwischen der Vertiefung und jedem Punkt innerhalb der Beschichtung einheitlich zu gestalten. Mit anderen Worten sind die Ablationsstellen in einem Raster oder Muster angeordnet. Alternativ kann eine chaotische, zufällige oder statistische Verteilung der Ablationsstellen angestrebt werden.

Vorzugsweise wird die Anzahl oder Dichte der Ablationsstellen in Richtung des Stromkollektors beziehungsweise des Ableiterfähnchens reduziert, da im Betrieb der Batterieelektrode die Elektronendichte in dieser Richtung abnimmt.

Ein zusätzlicher oder weiterer Aspekt der Erfindung sieht vor, dass der Laserstrahl mehrmals hintereinander über die Ablationsstellen geführt wird. Dies bedeutet, dass der Ablations- oder Strukturierprozess bis zu einer gewünschten Kavitätstiefe mehrfach wiederholt wird. Mit anderen Worten werden Multi- oder Mehrfachüberfahrten des Laserstrahls realisiert. Dadurch ist die in das Aktivmaterial eingebrachte Energiemenge exakt steuerbar, wodurch eine annähernd optimale Schnittkantenqualität im Randbereich der Strukturen (Wärmeeinflusszone, Delamination und Gratbildung) erreicht werden kann.

Nach aktuellen Stand der Technik weisen alle konventionellen Verfahren (mechanisches Stanzen oder Laserstrukturieren von Batterieelektroden) erhebliche Defizite der Schnittkanten- und Randqualität der ablatierten Geometrien auf. Durch die Multi- oder Mehrfachüberfahren ist erstmals eine wirtschaftliche Möglichkeit zur Umsetzung der Technologie in Großserie unter annähernd perfekter Strukturgeometrie (keine Wärmeeinflusszone, eine Delamination kleiner 10 µm und keinerlei Gratbildung) realisierbar.

Die Bearbeitung der Elektrodenmaterial- beziehungsweise Aktivmaterialbeschichtungsoberfläche kann beispielsweise statisch erfolgen. Dies bedeutet, dass die Förderung des Elektrodenmaterials während der Laserbearbeitung am Bearbeitungsort pausiert oder unterbrochen wird, und dass das Elektrodenmaterial nach der Reduzierung der Turtosität von dem Bearbeitungsort weg gefördert wird. In einer bevorzugten Ausführung erfolgt die Bearbeitung der Elektrodenmaterialoberfläche beziehungsweise die Ablation ohne eine Unterbrechung oder Pausierung der Förderung des Elektrodenmaterials. Mit anderen Worten erfolgt die Ablation bei einem bewegten Elektrodenmaterial, also ohne ein Abbremsen oder Anhalten. Die Laserbearbeitung zur Turtositätsreduzierung erfolgt somit "on-the-fly", also während einer kontinuierlichen Förderung des Elektrodenmaterials. Dadurch werden Beschleunigungskräfte auf das Elektrodenmaterial im Wesentlichen vollständig vermieden. Des Weiteren ist ein besonders gleichmäßiger und zeitreduzierter Produktionsfluss bei der Herstellung der Batterieelektroden gewährleistet.

Die Strukturierung oder Laserbearbeitung der Aktivmaterialbeschichtung kann unter Vakuum, reduzierter oder unter Atmosphäre erfolgen. Vorzugsweise erfolgt die Ablation hierbei unter Vakuum, so dass eine mikrometergenaue Oberflächenstrukturierung mit beliebigen Strukturierungsmustern möglich ist.

Die erfindungsgemäße Vorrichtung ist zur Herstellung einer Batterieelektrode vorgesehen sowie dafür geeignet und eingerichtet.

Die Vorrichtung weist hierbei beispielsweise ein Förderband, insbesondere ein Vakuumband, als Förder- oder Transfereinrichtung entlang einer Förderrichtung zu einem ortsfesten Bearbeitungsort auf. Dies bedeutet, dass das Elektrodenmaterial von der Fördereinrichtung als Bahnware zum Bearbeitungsort gefördert wird. Die Förderung erfolgt hierbei insbesondere planar, also im Wesentlichen in einer horizontalen Ebene. Das Vakuumband erzeugt hierbei geeigneterweise einen Unterdruck, mittels welchen das Elektrodenmaterial während der Förderung fixiert oder gehalten wird. Der Bearbeitungsort ist räumlich fest, dies bedeutet, dass der Bearbeitungsort bei der Förderung des Elektrodenmaterials nicht wandert oder sich bewegt, sondern sich in Bezug auf die Fördereinrichtung an einer festen Position befindet.

Die Vorrichtung weist im Bereich des Bearbeitungsortes einen Laser zur Erzeugung eines Laserstrahls auf, mit welchem die Oberfläche des Elektrodenmaterials beziehungsweise dessen Aktivmaterialbeschichtung strukturiert wird. Der Laser ist beispielsweise als ein gepulster (pulsed) oder als ein kontinuierlicher (continuous wave, CW) Faserlaser ausgeführt. Beispielsweise kann der Laser mit Femtosekunden-, Nanosekunden- oder Pikosekundenpulsen betrieben werden. Der Faserlaser weist hierbei eine für die Ablation des Elektroden- beziehungsweise Aktivmaterials geeignete Wellenlänge, vorzugsweise eine Wellenlänge im grünen oder Infrarot-Bereich (IR), beispielsweise etwa 530 nm oder 1000 nm (Nanometer), auf. Der Laser weist weiterhin beispielsweise eine Laserleistung im Kilowatt-Bereich (kW) auf.

Zur Ablenkung des Laserstrahls weist die Vorrichtung einen drehbaren Polygonscanner zur Ablenkung des Laserstrahls entlang einer schnellen Achse, sowie vorzugsweise einen verstellbaren Galvanometerscanner zur Ablenkung des Laserstrahls entlang einer langsamen Achse auf. Der Polygonscanner wird im Betrieb mit einer vorgebbaren Drehgeschwindigkeit gedreht oder rotiert, wobei der reflektierte oder abgelenkte Laserstrahl aufgrund der Drehung entlang der schnellen Achse bewegt wird. Der Galvanometerscanner ist mit einem Spiegel gekoppelt, welcher den vom Polygonscanner reflektierten Laserstrahl in Richtung eines optischen Objektivs ablenkt oder reflektiert. Der abgelenkte oder reflektierte Laserstrahl wird mit dem Objektiv auf die Oberfläche des Elektrodenmaterials beziehungsweise der Aktivmaterialbeschichtung fokussiert. Das Objektiv ist hierbei insbesondere als eine F-Theta-Linse ausgeführt.

Das Förderband sowie die Polygon- und Galvanometerscanner sind mit einem Controller, also einer Steuereinheit, gekoppelt. Dadurch ist eine besonders geeignete Vorrichtung realisiert.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, den Laser und dessen Ablenkung anzusteuern und/oder zu regeln, dass das Aktivmaterial an mehreren Ablationsstellen der Oberfläche lokal zumindest teilweise ablatiert wird.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Im Nachfolgenden sind Angaben hinsichtlich der Raumrichtungen auch insbesondere in einem Koordinatensystem der Vorrichtung angegeben. Die Abszissenachse (X-Achse, X-Richtung) ist hierbei entlang der Förderquerrichtung (Transversalrichtung) und die Ordinatenachse (Y-Achse, Y-Richtung) entlang der Förderlängsrichtung (Förderrichtung) sowie die Applikatenachse (Z-Achse, Z-Richtung) senkrecht zu der Ebene der Fördereinrichtung orientiert.

Der Laserstrahl wird zur Turtositätsreduzierung mittels des Polygonscanners und des Galvanometerscanners (Galvo-Scanner) über das Elektrodenmaterial bewegt. Hierbei lenkt der Polygonscanner den Laserstrahl beispielsweise in Förderbandquerrichtung (X) ab, wobei der Galvanometerscanner den Laserstrahl bedarfsweise in Förderbandlängsrichtung (Y) ablenkt. Die Fokussierung entlang der Z-Richtung erfolgt insbesondere mittels der F-Theta-Linse.

In einer denkbaren Weiterbildungsform weist die Vorrichtung anstelle des Galvanometerscanners vorzugsweise mehrere parallelisierte Polygonscanner und Objektive auf. Dies bedeutet, dass der Laserstrahl nicht entlang einer langsamen Achse abgelenkt wird, sondern dass mehrere parallele Laserstrahlen über entlang der langsamen Achse benachbart angeordnete Polygonspiegel über das Elektrodenmaterial geführt werden. Dadurch ist eine Taktzeiterhöhung, also eine Reduzierung der Produktionszeit, und somit ein besonders gleichmäßiger Produktionsfluss bei der Herstellung der Batterieelektroden realisiert. Eine solche Weiterbildungsform ist insbesondere hinsichtlich von Mehrfach- oder Multiüberfahrten bei einer nicht unterbrochenen Förderung vorteilhaft, da jede Überfahrt quasi mittels einem zugeordneten Polygonscanners erfolgt, so dass die Multiüberfahrten durch die in Förderrichtung aufeinanderfolgenden Polygonscanner realisiert werden.

Vorzugsweise weist die Vorrichtung einen Kollimator für den Laserstrahl auf, welcher beispielsweise zwischen dem Laser und dem Polygonscanner angeordnet ist.

Die Vorrichtung weist weiterhin beispielsweise eine Schneidvorrichtung zur Vereinzelung eines Elektrodenbandmaterials in Elektrodenblätter auf, wobei die Schneidvorrichtung in Förderrichtung beispielsweise vor oder hinter dem Bearbeitungsort angeordnet ist. Die Schneidvorrichtung kann hierbei beispielsweise als eine Laserschneidvorrichtung ausgebildet sein, welche das Elektrodenbandmaterial mittels Ablation vereinzelt.

Zweckmäßigerweise weist die Vorrichtung weiterhin eine Absaugung und/oder eine Reinigungseinheit zur insbesondere rückstandslosen Entfernung des ablatierten Materials von dem Elektrodenmaterial auf.

In einer vorteilhaften Ausgestaltung ist der Polygonscanner als ein sanduhrförmiger Polygonspiegelscanner mit einem oberen Spiegel und mit einem unteren Spiegel ausgeführt ist, wobei der Laserstrahl von dem oberen Spiegel zu dem unteren Spiegel und von dort zum Galvanometerscanner beziehungsweise zum F-Theta-Objektiv reflektiert wird. Unter dem oberen Spiegel ist hierbei insbesondere derjenige Spiegel zu verstehen, auf welchen der Laserstrahl von dem Laser trifft, wobei der untere Spiegel derjenige Spiegel ist, auf welchen der vom oberen Spiegel reflektierte Laserstrahl trifft, unabhängig von der tatsächlichen Orientierung der Spiegel im Raum. Dadurch ist eine besonders bauraumkompakte Ablenkung des Laserstrahls ermöglicht.

Die im Hinblick auf das Verfahren und/oder die Vorrichtung angeführten Vorteile und Ausgestaltungen sind sinngemäß auch auf die Batterieelektrode und/oder auf die Batteriezelle übertragbar und umgekehrt.

In einer bevorzugten Anwendung wird eine nach dem vorstehend beschriebenen Verfahren hergestellte Batterieelektrode in einer Fahrzeugbatterie verwendet. Durch das erfindungsgemäße Verfahren ist ein gleichmäßiger Produktionsfluss bei der Herstellung der Batterieelektrode realisier. Die Batterieelektrode weist eine reduzierte Turtosität auf, was sich vorteilhaft auf die Qualität und Leistung der damit ausgestatteten Fahrzeugbatterie beziehungsweise Batteriezelle überträgt. Die Batterieelektrode ist hierbei insbesondere als ein strukturiertes Einzelblatt (Elektrodenblatt) für eine LIB ausgeführt. Die Batteriezelle weist hierbei vorzugsweise einen LIB-Stapel aus mehreren solcher strukturierten Batterieelektroden auf.

Nachfolgend sind Ausführungsbeispiele der Erfindung anhand einer Zeichnung näher erläutert. Darin zeigen in schematischen und vereinfachten Darstellungen:
- Fig. 1: in perspektivischer Darstellung ausschnittsweise eine Vorrichtung zur Herstellung einer Batterieelektrode,
- Fig. 2: in Draufsicht ein Elektrodenband als Elektrodenmaterial,
- Fig. 3: in Draufsicht eine Batterieelektrode, und
- Fig. 4 bis Fig. 8: in Schnittdarstellung ein Elektrodenmaterial mit unterschiedlichen Strukturen.

Einander entsprechende Teile und Größen sind in allen Figuren stets mit den gleichen Bezugszeichen versehen.

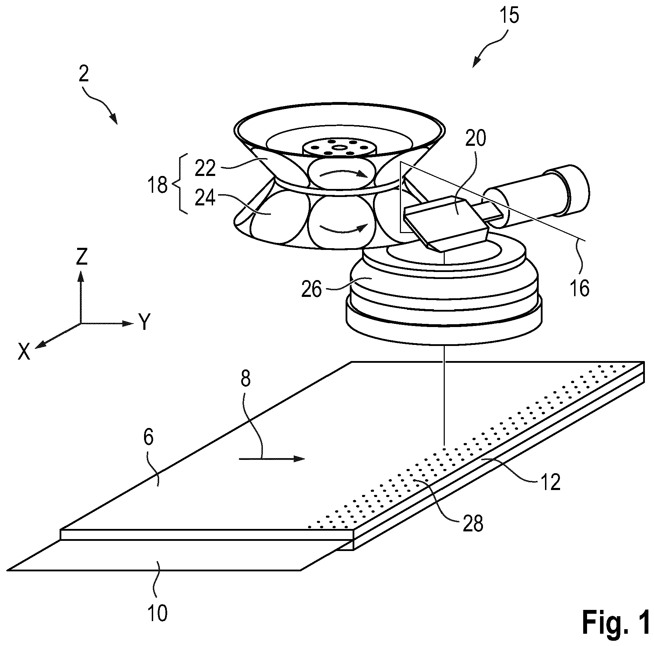

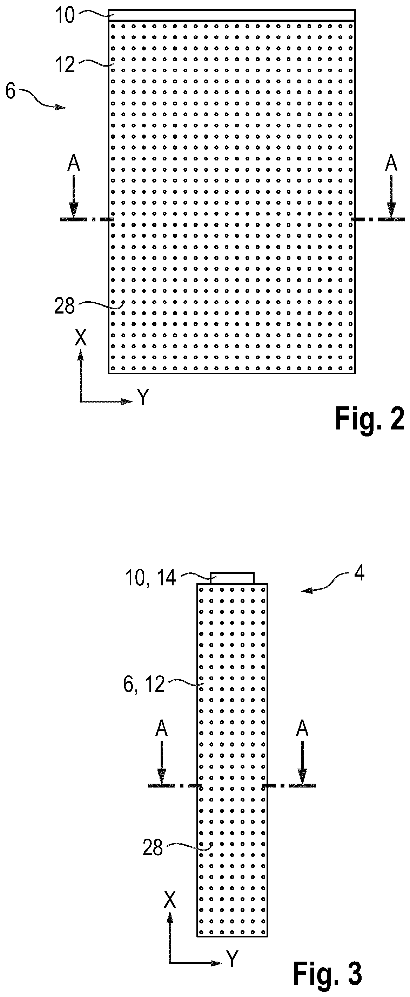

In den Fig.1 ist in vereinfachter und schematischer Darstellungen eine Vorrichtung 2 zur Herstellung von Batterieelektroden 4 (Fig. 3) gezeigt. Die hergestellten Batterieelektroden 4 sind hierbei insbesondere für Lithium-Ionen-Batterien beziehungsweise Lithium-Ionen-Batteriezellen vorgesehen sowie geeignet und eingerichtet.

Die Vorrichtung 2 weist ein nicht näher gezeigtes planares Förderband, beispielsweise ein Vakuumband, auf, welches ein Elektrodenmaterial 6 entlang einer Förderrichtung 8 mit einem kontinuierlichen Bandvorschub zu einem in Fig. 1 gezeigten Bearbeitungsort fördert.

Im Nachfolgenden sind Angaben hinsichtlich der Raumrichtungen auch insbesondere in einem Koordinatensystem der Vorrichtung 2 angegeben. Die Abszissenachse (X-Achse, X-Richtung) ist hierbei entlang der Förderbandquerrichtung (Transversalrichtung) und die Ordinatenachse (Y-Achse, Y-Richtung) entlang der Förderbandlängsrichtung (Förderrichtung 8) sowie die Applikaten-achse (Z-Achse, Z-Richtung) senkrecht zu der Ebene des Förderbandes orientiert.

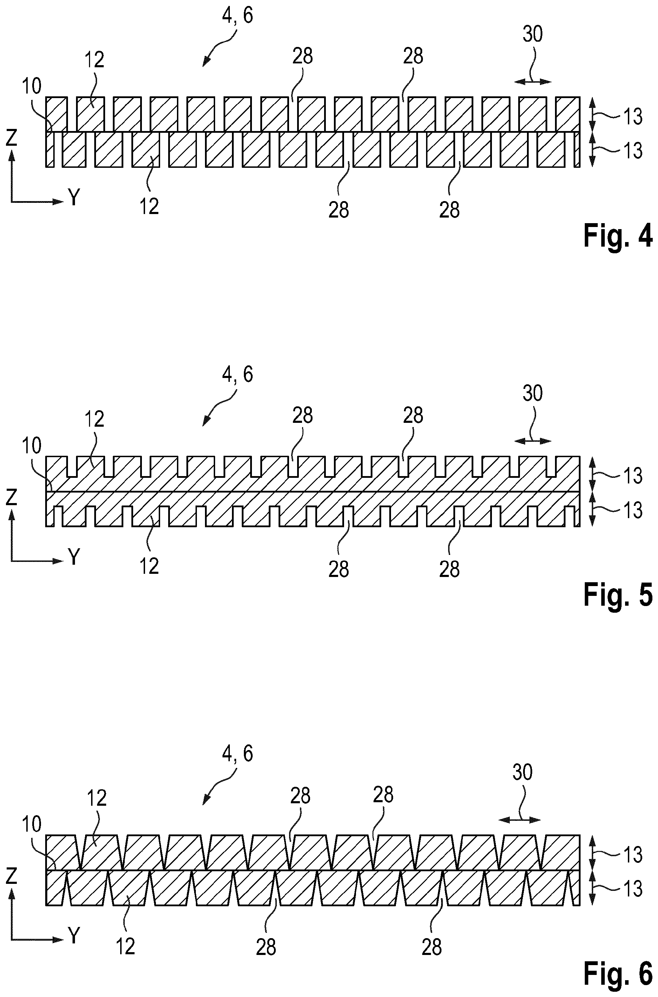

Das Elektrodenmaterial 6 ist in der in Fig. 1 und Fig. 2 gezeigten Ausführung insbesondere als ein band- oder streifenförmige Elektrodenbahn, beispielsweise als ein quasi endloses Rollenmaterial (Elektrodencoil, Elektrodenwickel), ausgeführt, und weist eine elektrisch leitfähige Folie 10, beispielsweise eine Kupfer- oder Aluminiumfolie, als Stromableiter, und eine darauf aufgebrachte Aktivmaterialbeschichtung 12 auf. Das Elektrodenmaterial 6 weist hierbei beispielsweise eine Breite von mehr als 100 mm, insbesondere zwischen 300 bis 600 mm, also im Wesentlichen die Kantenlänge der Batterieelektroden 4, auf, wobei die Länge des Elektrodenbandmaterials 14 wesentlich größer als dessen Breite oder dessen Höhe dimensioniert ist. Die Folie 10 weist beispielsweise eine Foliendicke von etwa 6 bis 12 µm (Mikrometer) auf. Die Aktivmaterialbeschichtung 12 ist hierbei vorzugsweise auf beide Seiten der Folie 10 aufgebracht. Die Aktivmaterialbeschichtung 12 weist in einem kalandrierten Zustand beispielsweise eine Schichtdicke 13 (Fig. 4 bis Fig. 8) von etwa 50 bis 100 µm auf.

Die Aktivmaterialbeschichtung 12 ist aus einem Aktivmaterial, also aus einem Anodenmaterial (Anodenaktivmaterial) oder einem Kathodenmaterial (Kathodenaktivmaterial), hergestellt. Das Elektrodenmaterial 6 weist hierbei beispielsweise eine Breite von mehr als 100 mm, insbesondere zwischen 300 bis 600 mm, also im Wesentlichen die Kantenlänge der Batterieelektroden 4, auf, wobei die Länge des Elektrodenmaterials 6 wesentlich größer als dessen Breite oder dessen Höhe dimensioniert ist.

Zur Herstellung der Batterieelektrode 4 wird die Elektrodenbahn mittels einer nicht näher gezeigten Schneideinheit zu Elektrodenblättern vereinzelt. Das Elektrodenmaterial 6 weist beispielsweise entlang seiner Längsrichtung einen nicht beschichteten oder unbeschichteten Randbereich der Folie 10 auf, also einen randseitigen Folienbereich, welcher nicht mit der Aktivmaterialbeschichtung 12 versehen ist. Im Zuge der Herstellung der Batterieelektrode 4 wird ein Ableiterfähnchen 14 zur Kontaktierung der Batterieelektrode 4 aus diesem Randbereich geschnitten. Die Batterieelektrode 4 entspricht im Wesentlichen einem Elektrodenblatt, bei welchem das Ableiterfähnchen 14 geschnitten ist.

Die Vorrichtung 2 weist am Bearbeitungsort eine Laseroptik 15 zur Bearbeitung des Elektrodenmaterials 6 auf, welche insbesondere oberhalb des Elektrodenmaterials 6 angeordnet ist. Die beispielsweise als Scankopf ausgestaltete Laseroptik 15 ist zur Oberflächenstrukturierung des Elektrodenmaterials 6 beziehungsweise der Aktivmaterialbeschichtung 12 vorgesehen, sowie dafür geeignet und eingerichtet.

Die Laseroptik 15 umfasst einen nicht näher gezeigten Laser zur Erzeugung eines Laserstrahls 16. Der Laser ist beispielsweise als ein gepulster Faserlaser mit einer Wellenlänge im grünen oder Infrarot-Bereich, beispielsweise etwa 530 nm oder 1000 nm, und mit einer Laserleistung im kW-Bereich ausgeführt. Der Laser kann hierbei im Femtosekunden-, Nanosekunden- oder Pikosekundenbereich betrieben beziehungsweise gepulst werden.

Die Laseroptik 15 weist weiterhin einen drehbaren oder rotierbaren Polygonscanner 18 zur Ablenkung des Laserstrahls 16 entlang einer schnellen Achse (X), sowie einen verstellbaren und reflektierenden Galvanometerscanner 20 zur Ablenkung des Laserstrahls 16 entlang einer langsamen Achse (Y) auf. Beispielsweise ist ein Kollimator zwischen dem Laser und dem Polygonscanner 18 angeordnet.

Der Polygonscanner 18 ist als ein sanduhrförmiger Polygonspiegelscanner ausgeführt. Der Polygonscanner 18 weist hierbei eine Anzahl von oberen Spiegeln 22 und eine entsprechende Anzahl von unteren Spiegeln 24 auf. Die geraden oder planen Spiegel 22, 24 sind jeweils als Polygonflächen entlang des Außenumfangs einer oberen und unteren Konusfläche des Polygonscanners 18 (Polygonrad) verteilt angeordnet sind. Die Spiegel 22, 24 sind in der Fig. 1 lediglich beispielhaft mit Bezugszeichen versehen. Der Laserstrahl 16 wird hierbei von einem der oberen Spiegel 22 zu dem jeweils fluchtend angeordneten unteren Spiegel 24 und von dort zum Galvanometerscanner 20 reflektiert. Durch die Rotation der Spiegel 22, 24 wird der Laserstrahl 16 mit einer der Rotations- oder Drehgeschwindigkeit entsprechenden Ablenkgeschwindigkeit entlang der Förderbandquerrichtung beziehungsweise Elektrodenmaterialquerrichtung (X) bewegt. Durch den Polygonscanner 18 sind besonders hohe Strahlablenkgeschwindigkeiten realisierbar. Beispielsweise weist der Polygonscanner 18 einen Laservorschub von 2 m/s (Meter pro Sekunde) bis 1000 m/s auf.

Vorzugsweise wird die Laserstrahlung 16 mit der Bewegung des Polygonrades getaktet. Durch das gezielte, zur Bewegung synchronisierte Zu- beziehungsweise Abschalten der Laserstrahlung 16 können innerhalb des Scanfeldes der Laseroptik 15 (Bearbeitungsort) nahezu beliebige "geradlinige" Vektoren mit definierter Länge laserbearbeitet werden. Durch eine zusätzliche Bewegung des Galvanometerscanners 20 die Bearbeitungslinien bei Bedarf innerhalb des Scanfeldes senkrecht (Y) verschoben werden. Der Galvanometerscanner 20 weist hierbei einen kippbaren oder verschwenkbaren Spiegel auf, mit welchem der Laserstrahl entlang einer als langsamen Achse (Y) bezeichneten Richtung abgelenkt wird.

Der mittels des Polygonscanners 18 und Galvanometerscanners 20 abgelenkte Laserstrahl 16 wird mit einem F-Theta-Objektiv beziehungsweise mit einer F-Theta-Linse 26 auf die Oberfläche des darunter angeordneten Elektrodenmaterials 6 fokussiert. Durch die im Fokus auftretenden hohen (Laser-)Intensitäten wird das bestrahlte Material der Aktivmaterialbeschichtung 12 lokal ablatiert.

Das Förderband sowie die Laseroptik 15 sind hierbei signaltechnisch an einen nicht näher gezeigten Controller, also an ein Steuergerät oder eine Steuereinheit, angeschlossen, und von diesem gesteuert und/oder geregelt.

Das im Zuge der Laserbearbeitung ablatierte Material des Elektrodenmaterials 6 wird durch eine nicht näher gezeigte Absaugung mittels eines Luft- oder Blasstroms abgesaugt oder entfernt. Vorzugsweise wird die Oberfläche des Elektrodenmaterials 6 anschließend mittels einer Reinigungseinheit gereinigt.

Die Vorrichtung 2 ist beispielsweise in Vakuum oder in einer reduzierten Atmosphäre angeordnet.

Der Controller ist dazu vorgesehen und eingerichtet das Elektrodenmaterial 6 mittels des Laserstrahls 16 derart zu strukturieren, dass die Turtosität des Elektrodenmaterials 6 erhöht wird. Hierzu wird der Laserstrahl 16 mittels der Laseroptik 15 an einer Vielzahl von räumlich beabstandeten lokalen Ablationsstellen 28 fokussiert, und dadurch Kavitäten oder Vertiefungen in das Aktivmaterial der Aktivmaterialbeschichtung 12 eingebracht. Die Ablationsstellen 28 sind in den Figuren lediglich beispielhaft mit Bezugszeichen versehen. Vorzugsweise werden beide Aktivmaterialbeschichtungen 12 des Elektrodenmaterials 6 beziehungsweise der Folie 10 strukturiert, wobei geeigneterweise eine zweite Laseroptik 15 für die Strukturierung der zweiten Oberfläche vorgesehen ist.

Die Aktivmaterialbeschichtung 12 wird an den Ablationsstellen 28 zumindest zur Hälfte, insbesondere im Wesentlichen vollständig, ablatiert. Mit anderen Worten wird im Zuge der Ablation mindestens 50% bis zu beispielsweise 99% oder 100% der Aktivmaterialbeschichtung 12 an der Ablationsstelle 28 entfernt. Die Ablationsstellen 28 weisen hierbei vorzugsweise einen Durchmesser von einigen wenigen Mikrometern, insbesondere kleiner 20 µm, auf. Die Ablationsstellen 28 sind in dieser Ausführungsform beispielsweise in einem Muster oder Raster angeordnet, wobei ein laterale Abstand 30, also der Abstand in der XY-Ebene, zwischen je zwei benachbarten Ablationsstellen ist beispielsweise auf eine oder zwei Schichtdicken 13 dimensioniert. Vorzugsweise ist die Anzahl oder Dichte der Ablationsstellen 28 in Richtung des Ableiterfähnchens reduziert, da im Betrieb der Batterieelektrode die Ionenstromdichte in Richtung des Stromabnehmers abnimmt.

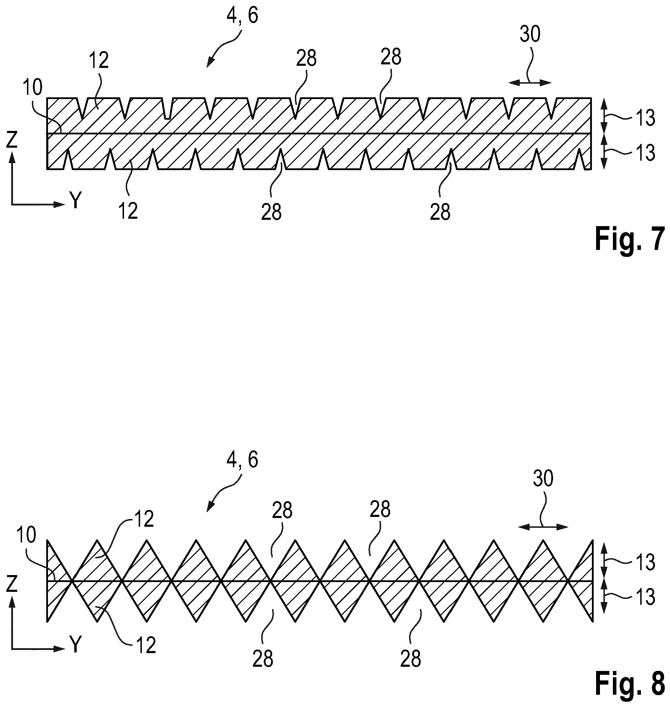

Nachfolgend sind anhand der Figuren 4 bis 8 unterschiedliche Strukturgeometrien der Ablationsstellen 28 näher erläutert. Die Fig. 4 bis Fig. 8 zeigen jeweils eine Schnittdarstellung des Elektrodenmaterials 6 entlang der Schnittlinie A-A gemäß Fig. 2 beziehungsweise Fig. 3. In den Ausführungsbeispielen der Fig. 4 bis Fig. 7 sind die Ablationsstellen 28 der gegenüberliegenden Aktivmaterialbeschichtungen 12 entlang der Y-Richtung zueinander versetzt angeordnet. In dem Ausführungsbeispiel der Fig. 8 sind die Ablationsstellen 28 fluchtend zueinander angeordnet.

Die Ablationsstellen 28 der Fig. 4 sind als etwa rechteckförmige Aussparungen oder Vertiefungen ausgeführt, welche sich im Wesentlichen bis zur Folie 10 erstrecken. Mit anderen Worten weisen die Ablationsstellen 28 eine Tiefe auf, welche im Wesentlichen der Schichtdicke 13 entspricht, die Ablationsstellen 28 durchsetzen die Schichtdicke 13 also im Wesentlichen vollständig. Beispielsweise wird hierbei 99% bis 100% des Aktivmaterials mittels des Laserstrahls 16 ablatiert.

Das Ausführungsbeispiel der Fig. 5 entspricht im Wesentlichen dem der Fig. 4, wobei lediglich 50% des Aktivmaterials ablatiert ist. Mit anderen Worten weisen die Ablationsstellen 28 der Fig. 5 lediglich eine Tiefe auf, welche der Hälfte der Schichtdickte 13 entspricht. Die Ablationsstellen 28 sind hierbei insbesondere als ideale, zylindrische, beispielsweise kreiszylindrische, Strukturen ausgeführt, welche ein Maximum an Beschichtungsmaterial (und damit Energiespeicher) in der Elektrode belassen und trotzdem einen lonendiffusionskanal bilden. Zusätzlich kann auf den Versatz der Ablationsstellen 28 an der Oberseite und Unterseite verzichtet werden.

In den Ausführungsbeispielen der Fig. 6 und Fig. 7 weisen die Ablationsstellen 28 eine etwa dreieckförmige oder keilförmige Querschnittsform auf, wobei sich die Ablationsstellen 28 in der Fig. 6 bis zur Folie, also durch die komplette Schichtdicke 13, und in der Fig. 7 lediglich bis zur Hälfte der Schichtdicke 13 erstrecken. Derartige Ablationsstellen 28 sind aufgrund der Aufweitung beim Lasern besonders einfach herstellbar.

Das Ausführungsbeispiel der Fig. 8 zeigt Ablationsstellen 28 mit einer Querschnittsform, welche im Wesentlichen einem gleichseitigen Dreieck entspricht. Die Seitenlänge entspricht hierbei im Wesentlichen dem Abstand 30, so dass im Querschnitt ein mäanderartiges Zickzackmuster der Ablationsstellen 28 realisiert ist.

Alternativ zu den vorstehend beschriebenen Strukturen sind auch weitere Linienförmige Strukturen oder andere 3D Geometrien für die Ablationsstellen 28 denkbar.

Das Elektrodenmaterial 6, also die Elektrodenbahn oder das Elektrodenblatt, ist somit mit einem Polygonscanner strukturiert, und weist dementsprechenden Strukturen/Kavitäten als Ablationsstellen auf, welche die Turtosität reduziert. Vorzugsweise sind hierbei als spezifischen Qualitätsparameter möglichst keine Wärmeeinflusszone, eine Delamination <10 µm und keinerlei Gratbildung realisiert.

Zur Realisierung dieser Qualitätsparameter wird der Laserstrahl 16 beispielsweise mehrmals hintereinander über die Ablationsstellen 28 geführt wird. In einer denkbaren Ausführung wird der Laserstrahl 16 hierbei zwischen 1- und 100-mal über die Ablationsstellen 28 bewegt. Die Mehrfach- oder Multiüberfahrten erfolgen hierbei im Wesentlichen ohne eine Unterbrechung der Förderung des Elektrodenmaterials 6. Mit anderen Worten erfolgt die Oberflächenstrukturierung ohne, dass das Förderband gebremst oder gestoppt wird. Die Laserstrukturierung der Aktivmaterialbeschichtung 12 erfolgt somit "on-the-fly" während einer kontinuierlichen Förderung des Elektrodenmaterials 6. Geeigneterweise wird der Laserstrahl 16 mit jeder Überfahrt eine definierte Distanz entlang der Förderrichtung 8 getaktet mit dem Galvanometerscanner 20 nachgeführt wird, so dass die Laserstrahlen 16 stets die gleichen Ablationsstellen des Elektrodenmaterials 6 treffen. Durch die Mehrfachüberfahrten ist eine Kalt-Ablation des Aktivmaterials, also eine Ablation mit einer besonders geringen Wärmeeintragszone ermöglicht. Dadurch ist das Einbringen der Struktur beziehungsweise der Vertiefungen mit einer geringen oder moderaten Laserleistung realisierbar, wodurch eine besonders hohe Schnittkantenqualität im Randbereich der Ablationsstellen 28 (Wärmeeinflusszone, Delamination und Gratbildung) erreicht werden kann.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

In einer denkbaren Weiterbildungsform weist die Vorrichtung 2 beispielsweise mehrere parallelisierte Laseroptiken 14 auf.

### Bezugszeichenliste

- 2: Vorrichtung
- 4: Batterieelektrode
- 6: Elektrodenmaterial
- 8: Förderrichtung
- 10: Folie
- 12: Aktivmaterialbeschichtung
- 13: Schichtdicke
- 14: Ableiterfähnchen
- 15: Laseroptik
- 16: Laserstrahl/Laserstrahlung
- 18: Polygonscanner
- 20: Galvanometerscanner
- 22: Spiegel
- 24: Spiegel
- 26: F-Theta-Linse
- 28: Ablationsstelle
- 30: Abstand

## Patentansprüche

1. Verfahren zur Herstellung einer Batterieelektrode (4) einer Batteriezelle, aufweisend ein Elektrodenmaterial (6) mit einer Folie (10) und mit einer darauf aufgebrachten Aktivmaterialbeschichtung (12),
- wobei das Elektrodenmaterial (6) entlang einer Förderrichtung (8) zu einem Bearbeitungsort gefördert wird,
- wobei an dem Bearbeitungsort ein Laserstrahl (16) mittels eines drehbaren Polygonscanners (18) über das Elektrodenmaterial (6) bewegt und durch eine F-Theta-Linse (26) auf das Elektrodenmaterial (6) fokussiert wird,
- wobei die Aktivmaterialbeschichtung (12) mittels des fokussierten Laserstrahls (16) an einer Vielzahl von Ablationsstellen (28) lokal entfernt wird, so dass die Turtosität des Elektrodenmaterials (6) reduziert wird.

2. Verfahren nach Anspruch 1,
**dadurch gekennzeichnet,**
**dass** die Aktivmaterialbeschichtung (12) an den Ablationsstellen (28) zumindest zur Hälfte, insbesondere im Wesentlichen vollständig, entfernt wird.

3. Verfahren nach einem der Ansprüche 1 oder 2,
**dadurch gekennzeichnet,**
**dass** die Ablationsstellen (28) jeweils einen Durchmesser kleiner 20 µm aufweisen.

4. Verfahren nach einem der Ansprüche 1 bis 3,
**dadurch gekennzeichnet,**
**dass** ein lateraler Abstand zwischen je zwei Ablationsstellen (28) zwischen einer und zwei Schichtdicken (13) der Aktivmaterialbeschichtung (12) entspricht.

5. Verfahren nach einem der Ansprüche 1 bis 4,
**dadurch gekennzeichnet,**
**dass** der Laserstrahl (16) mehrmals hintereinander über die Ablationsstellen (28) geführt wird.

6. Verfahren nach einem der Ansprüche 1 bis 5,
**dadurch gekennzeichnet,**
**dass** die Ablation ohne Unterbrechung der Förderung des Elektrodenmaterials (6) durchgeführt wird.

7. Vorrichtung (2) zur Herstellung einer Batterieelektrode (4), aufweisend
- ein Elektrodenmaterial (6) mit einer Folie (10) und mit einer darauf aufgebrachten Aktivmaterialbeschichtung (12),
- eine Fördereinrichtung zur Förderung des Elektrodenbandmaterials (6) entlang einer Förderrichtung (8) zu einem Bearbeitungsort,
- einen Laser zur Erzeugung eines Laserstrahls (16),
- einen drehbaren Polygonscanner (18) zur Ablenkung des Laserstrahls (16),
- eine F-Theta-Linse (26) zur Fokussierung des abgelenkten Laserstrahls (16) auf das Elektrodenmaterial (6), und
- einen Controller zur Durchführung eines Verfahrens nach einem der Ansprüche 1 bis 7.

8. Vorrichtung (2) nach Anspruch 7,
**dadurch gekennzeichnet,**
**dass** der Polygonscanner (20) als ein sanduhrförmiger Polygonspiegelscanner mit einem oberen Spiegel (22) und mit einem unteren Spiegel (24) ausgeführt ist, wobei der Laserstrahl (16) von dem oberen Spiegel (22) zu dem unteren Spiegel (24) und von dort in Richtung der F-Theta-Linse (26) reflektiert wird.

## Claims

1. Method for producing a battery electrode (4) of a battery cell, having an electrode material (6) having a foil (10) and having an active material coating (12) applied thereto,
- wherein the electrode material (6) is conveyed in a conveying direction (8) to a processing site,
- wherein, at the processing site, a laser beam (16) is moved across the electrode material (6) by means of a rotatable polygon scanner (18) and is focused onto the electrode material (6) by an F-theta lens (26),
- wherein the active material coating (12) is removed locally at a plurality of ablation sites (28) by means of the focused laser beam (16) so as to reduce the tortuosity of the electrode material (6).

2. Method according to Claim 1,
**characterized in that**
the active material coating (12) at the ablation sites (28) is removed to an extent of at least half, in particular essentially completely.

3. Method according to either of Claims 1 and 2,
**characterized in that**
the ablation sites (28) each have a diameter of less than 20 µm.

4. Method according to any of Claims 1 to 3,
**characterized in that**
a lateral distance between any two ablation sites (28) corresponds to between one and two layer thicknesses (13) of the active material coating (12).

5. Method according to any of Claims 1 to 4,
**characterized in that**
the laser beam (16) is guided across the ablation sites (28) repeatedly in succession.

6. Method according to any of Claims 1 to 5,
**characterized in that**
the ablation is performed without interrupting the delivery of the electrode material (6).

7. Device (2) for producing a battery electrode (4), having
- an electrode material (6) having a foil (10) and having an active material coating (12) applied thereto,
- a conveying device for conveying the electrode strip material (6) to a processing site in a conveying direction (8),
- a laser for generating a laser beam (16),
- a rotatable polygon scanner (18) for deflecting the laser beam (16),
- an F-theta lens (26) for focusing the deflected laser beam (16) onto the electrode material (6), and
- a controller for performing a method according to any of Claims 1 to 7.

8. Device (2) according to Claim 7,
**characterized in that**
the polygon scanner (20) is designed as an hourglassshaped polygon mirror scanner having an upper mirror (22) and a lower mirror (24), wherein the laser beam (16) is reflected from the upper mirror (22) to the lower mirror (24) and thence in the direction of the F-theta lens (26).

## Revendications

1. Procédé de fabrication d'une électrode de batterie (4) d'une cellule de batterie, comportant un matériau d'électrode (6) doté d'un film (10) et d'un revêtement de matériau actif (12) appliqué sur celui-ci,
- dans lequel le matériau d'électrode (6) est transporté le long d'une direction de transport (8) vers un lieu de traitement,
- dans lequel, au lieu de traitement, un faisceau laser (16) est déplacé sur le matériau d'électrode (6) au moyen d'un dispositif de balayage polygonal rotatif (18) et est focalisé sur le matériau d'électrode (6) à travers une lentille F-Thêta (26),
- dans lequel le revêtement de matériau actif (12) est localement enlevé au moyen du faisceau laser focalisé (16) en une pluralité de points d'ablation (28), de sorte que la tortuosité du matériau d'électrode (6) est réduite.

2. Procédé selon la revendication 1,
**caractérisé en ce que**
le revêtement de matériau actif (12) est enlevé aux points d'ablation (28) au moins à moitié, et en particulier de manière sensiblement complète.

3. Procédé selon l'une quelconque des revendications 1 ou 2,
**caractérisé en ce que**
les points d'ablation (28) présentent chacun un diamètre inférieur à 20 µm.

4. Procédé selon l'une quelconque des revendications 1 à 3,
**caractérisé en ce que**
une distance latérale entre deux points d'ablation (28) correspond à une à deux épaisseurs de couche (13) du revêtement de matériau actif (12).

5. Procédé selon l'une quelconque des revendications 1 à 4,
**caractérisé en ce que**
le faisceau laser (16) est amené à passer plusieurs fois successivement sur les points d'ablation (28).

6. Procédé selon l'une quelconque des revendications 1 à 5,
**caractérisé en ce que**
l'ablation est réalisée sans interruption du transport du matériau d'électrode (6).

7. Dispositif (2) de fabrication d'une électrode de batterie (4), comportant
- un matériau d'électrode (6) doté d'un film (10) et d'un revêtement de matériau actif (12) appliqué sur celui-ci,
- un dispositif de transport pour transporter le matériau de bande d'électrode (6) le long d'une direction de transport (8) vers un lieu de traitement,
- un laser pour générer un faisceau laser (16),
- un dispositif de balayage polygonal rotatif (18) pour dévier le faisceau laser (16),
- une lentille F-Thêta (26) pour focaliser le faisceau laser dévié (16) sur le matériau d'électrode (6), et
- un dispositif de commande pour mettre en œuvre un procédé selon l'une quelconque des revendications 1 à 7.

8. Dispositif (2) selon la revendication 7,
**caractérisé en ce que**
le dispositif de balayage polygonal (20) est réalisé sous la forme d'un dispositif de balayage à miroir polygonal en forme de sablier doté d'un miroir supérieur (22) et d'un miroir inférieur (24), le faisceau laser (16) étant réfléchi depuis le miroir supérieur (22) vers le miroir inférieur (24) et de là, en direction de la lentille F-Thêta (26).
